# EUROPEAN PATENT SPECIFICATION

(11) **EP 2 918 167 B1**
(45) Date of publication and mention of the grant of the patent: **23.10.2019**
(21) Application number: 14159282.4
(22) Date of filing: 12.03.2014
(51) Int. Cl.: A01K 85/10

(54) **Spinner fishing lure**
Angelköder mit Spinnerblatt
Leurre de pêche avec étrier rotatif et palette

(43) Date of publication of application: 16.09.2015
(73) Proprietor: Heesch, Christian M., Hallandale Beach, FL 33009 (US)
(72) Inventor: Heesch, Christian M., Hallandale Beach, FL 33009 (US)
(74) Representative: HGF Limited

(56) References cited:
- DE-A1- 10 015 572
- FR-A1- 2 993 436
- US-A- 3 090 153
- US-A- 4 599 821
- US-A- 5 956 887

## Description

The present invention relates to artificial lures for fishing. More particularly, the present invention relates to an improved spinner lure that utilizes a uniquely configured jointed lure central structure with weighted hook and an adjustable line attachment piece.

### BACKGROUND

Fishing with artificial lures is the most popular fishing method in the U.S. In very general terms, a lure, carrying a hook and attached to a fishing line, is cast into the water and pulled toward the angler. Visual appearance, motion pattern, and vibratory signals of the lure entice predatory fish to chase and swallow it, which, in turn, allows for the capture of the fish.

Spinner-type lures are one of the most popular artificial baits on the market. The two basic forms are spinners and spinner baits. Spinners (in Britain sometimes referred to as 'bar-spoons'), feature a rotating blade mounted on a wire shaft which has a proximal loop for the attachment of fishing line, a distal loop for the attachment of a fishing hook, and usually a lure body, a weight element around the shaft located between the hook and the spinner blade. Spinner baits have two wire shafts, joined at one end by a looped connection, which serves as line attachment point and which positions the two wire shafts in the shape of a V relative to each other. One wire shaft carries one or more rotating elements for the attraction of fish, while the other wire element carries a weighted fishing hook.

Both spinner-type lures, spinners and spinner baits, primarily attract fish through the visual and vibratory signals emitted by the rotating blade, yet neither of them will catch unless the fish swallows the hook, located at some distance from the fish-attracting blade. In order to make the hook more appealing to fish, manufacturers often add decorative 'dressing' to its shank, such as buck tail hair or tinsel material.

While both spinners and spinner baits attract fish by the rotational movement of the spinning blade, this rotational movement is symmetric and even for spinners whose wire shaft is moving coaxially with the travel direction of the lure, whereby it is asymmetric and uneven for spinner baits, whose blades are rotating around a wire shaft which moves at an angle to the travel direction of the lure. Such uneven rotational movements introduce additional, fish attracting thumping vibrations, in theory an advantage for the spinner bait type lure over the even and less pulsating rotational signals emitted by the spinner. This advantage of spinner baits is a disadvantage at the same time, though, since the enhanced attractiveness of the blade-carrying arm of the spinner bait detracts the fish's attention from the object intended for its affection - the hook-carrying opposite arm of the lure.

Some currently commercially available single axis spinner type lures do introduce a small degree of off-axis rotation of the blade as a side-effect of features designed to achieve other goals. Such commercially available spinners (to be discussed in more detail below) include those that have an elongated triangular loop for attachment of fishing line (a design intended to reduce line twist), and "jig-head" type spinners (a design intended to allow for blade rotation of a freely sinking lure and for depth fishing). Regrettably, the design elements causing this mild degree of off-axis blade rotation simultaneously hinder the translation of that off-axis rotation into significant thumping vibrations, and they even render, in some instances, the wire axis unstable.

All of these problems could be tackled if it were possible to combine the advantage of the spinner (fish-catching hook and fish-attracting blade mounted in close spatial proximity on a single wire element) with the advantage of the spinner bait (emission of both rotational and pulsating vibrations owing to an angulated position of the rotational axis of the spinning blade in relation to the travel direction of the lure) while avoiding design elements that either render the wire axis unstable, limit the degree of off-axis rotation that is achievable, or hinder the translation of such off-axis rotation into thumping rotations. It is an objective of embodiments of this invention to present a spinner that fulfils these conditions.

In addition, before it can attract and catch fish, a good lure has to be cast into the right spot by the angler. Spinners, with a weighted lure body in the middle of the lure, and often bulky but light-weight dressing around a treble hook at the end, are notorious for the hook fouling the line during the casting process, subsequently preventing the lure from working properly when in the water. It is therefore an additional objective of this invention to present changes which greatly reduce the chance that the hooks fouls the line during the casting process.

Further, due to the rapid rotation of the blade around the axis of the lure, spinners often present another vexing problem: line twist. The rotating blade imparts a rotating movement on the spinner itself, which is transmitted onto the fishing line, causing its eventual entanglement and damage. It is an objective of this invention to present changes which will reduce this problem.

Lastly, all artificial lures, as opposed to natural baits, pose yet another problem to the fisherman: fish tend to come off after striking the lure by 'throwing the hook'. Natural baits, usually presented to the fish in a static way, are often swallowed whole and deeply, with no chance for the fish to come off. Matters are different with artificial baits, which are often large, and which have to be chased by the fish. In most cases, the lure itself will remain outside the mouth of the fish, with only one of the hooks embedded lightly in its lip. Twisting and turning movements of the fish, and shaking of its head, will often lead to dislodgement of the hook and loss of the fish, with the lure serving as a lever. In general, the longer and the more rigid the lure, the easier for the fish to translate rotational and angular movements into effective leverage to 'throw the hook' - crankbaits and spoons, but also larger spinners and spinner baits such as those designed for muskie fishing are infamous in that regard. It is therefore an objective of this invention to present changes which greatly reduce the ability of the fish to use the lure as a lever to dislodge the hook.

A fishing keel is disclosed in US3090153. DE10015572 discloses a spinner for angling. US5956887 discloses a blade and spinner type lure. FR2993436 discloses a lure for fishing. A fishing lure is also disclosed in US4599821, according to the preamble of independent claim 1. .

### BRIEF SUMMARY OF THE DISCLOSURE

Embodiments of the present invention seek to address the problems confronted in the art in a simple and straightforward manner.

According to the present invention, there is provided a spinner lure fishing apparatus as set forth in claim 1 of the appended claims. Additional features of embodiments of the present invention are set forth in the dependent claims.

The embodiments of the invention have a single long axis, as opposed to the two long axes arranged in the 'safety pin' fashion that are typical for many spinner baits. These embodiments break down the single long axis into a plurality of elements. The proximal portion of this long axis is formed by a stiff wire shaft element (an example of a rigid wire), kept as short as possible with the minimum length dependent on the size and shape of the attached rotating blade, and ending in a proximal and a distal loop. The proximal loop is used to attach the lure to fishing line, the distal loop is used to attach a subsequent element forming the distal portion of the lure's long axis, either a second stiff wire shaft element, or a piece of flexible material, preferably wire, or one or more split rings.

There is provided a rotating blade mounted on the proximal stiff wire shaft (either and preferably by way of a clevis, or by direct passing of the wire shaft through a portion of the blade), however, deviating from the traditional model, the stiff wire shaft ends right below the attachment site of the spinning blade. Traditional spinners have a lure body, a weighted element usually located distally to the spinning blade on the stiff wire shaft. This novel lure shortens the stiff wire shaft as much as possible, and may feature a second, possibly flexible, wire or split ring element, forming the lure's distal long axis portion, which may carry one or more lure body elements that are, in this point also deviating from the traditional model, not heavily weighted in the preferred embodiment of the invention.

A rigid line attachment head is mounted on the proximally located wire shaft towards the proximal end thereof. This rigid line attachment element has one or more apertures which allow for the attachment of fishing line at increasing distances from the wire shaft. If the lure is attached to the line in the traditional way at the proximal end of the proximal stiff wire shaft, the shaft will follow the fishing line, and the direction of the pull, in a coaxial fashion, and the blade, rotating around the stiff wire shaft, will stay at the same angle in relation to the wire shaft throughout the 360° turn, thereby emitting regular and constant pressure signals. If the lure is attached to the line at one of the apertures located on the rigid line attachment head, the wire shaft will follow the fishing line at an angle in relation to the line and the direction of the pull, with the degree of deviation from a straight coaxial position increasing commensurate with the distance of the chosen aperture from the wire shaft. Owing to the now tilted position of the wire shaft in relation to the direction of the pull, the rotating blade will find uneven water resistance during its turn around the shaft, with maximum resistance encountered at its closest position towards the point of line attachment, and minimum resistance at its maximal distance from said point of line attachment. This varying resistance, in turn, will lead to an inverse change in the angle of rotation of the blade, with a maximum angle of rotation in relation to the shaft at the time point of minimal water resistance, and a minimum angle of rotation in relation to the shaft at the point of maximal water resistance. Now, in addition to emitting an even and constant rotational pressure signal, the lure also emits a superimposed thumping signal with each rotation, most appealing to a predatory fish's appetite and aggressive instincts. Unlike a spinner bait type lure, however, this spinner lure features the thumping signal emitting blade and the hook in close spatial proximity, on the same wire element, eliminating for the fish any and all feelings of uncertainty as to what lure part to swallow - the rotating blade or the hook - since both can be devoured with ease at the same time.

Next, certain embodiments feature at least one weight element mounted either around the shank of a hook or adjacent to its distal bends (in the case of the hook type most commonly used, the treble hook, this area is hereafter referred to as the 'trifurcation'), and further, also departing from the design of traditional spinner lures, the current invention minimizes the weight of the lure body elements. In doing so, these embodiments shift the centre of mass of the lure from its mid-portion toward its distal-most portion, the hook. Casting the lure will now inevitably put the heaviest element, the hook, ahead of all lighter elements, most notably the fishing line located on the opposing end of the wire shaft, thereby all but eliminating any possibility of the hook fouling the line.

Next, and again unlike traditional spinner lures, the long axis of the lure may be formed of a plurality of segments, either two rigid but short wire elements, or a rigid wire element and a flexible wire element, mounted one after the other, or a single wire element and one or more split rings attached thereto, thereby significantly shortening the portions of the lure's total long axis which are rigid. This arrangement not only limits possible bending damage to the rigid wire elements due to non-coaxial force that might be exerted on the lure by pulling, as might occur due to snagging or due to a large fish being played, but also, by keeping the rigid portions of the long axis of the lure short, the ability of a loosely hooked fish to use the lure as a lever to free itself is significantly reduced.

Finally, the proximal portion of certain embodiments, consisting of the initial wire element carrying the attachment head and the rotating blade, can be used separately from the other features described in the present disclosure, in that the proximal portion can be linked to, and set ahead of, many currently commercially available fishing lures, thereby given them the added attractiveness and fish-catching potential caused by the proximal portion's off-axis rotating blade.

There are therefore numerous advantages of embodiments of the present invention, as listed below:
1. The novel weight distribution, shifting the centre of gravity towards the hook and away from the point of line attachment, ensures that lure-entangling and line-fouling during the casting process are minimized.
2. Further, the weight distribution of this lure increases the precision with which it can be cast to the suspected fish-holding location.
3. The off-axis rotation of the spinning blade, when the fishing line is attached to an off-axis aperture adds a thumping pressure signal to the standard constant rotational signal of a spinner type lure, thereby increasing its attractiveness to fish.
4. Also owing to the described off-axis rotation pattern, when the fishing line is attached to an off-axis aperture, the total resistance encountered during the retrieval of the lure is maximized, leading to an increase of the amplitude of all pressure signals emitted, thereby further increasing the lure's attractiveness to fish.
5. With more than one alternative line attachment aperture located at the rigid line attachment head mounted on the wire shaft, the angler can chose the angle at which the wire shaft moves in relation to the direction of travel of the lure, and thereby adjust the intensity of the pressure signals exactly to the fish's liking.
6. Owing to the fact that the hook is attached to a plurality of elements, rather than to a single, elongated and inflexible wire element as in traditional spinners, the lure cannot be misused by fish as a levering instrument to unhook themselves.
7. The rigid line attachment head mounted on the wire shaft offers space for decorative enhancements, an option not otherwise available for spinner type lures, such as decorative elements resembling eyes, known to attract fish to lures.
8. Given the non-coaxial relationship of the stiff wire shaft and the direction of pull, and given the surface area presented by the rigid wire attachment head, the rotational inertia of the lure is greatly increased, thereby preventing the rotational movements of the blade from rotating the wire shaft itself. This reduces line-twist, a vexing problem otherwise encountered with standard spinners, often forcing the angler to add a vane or weighted element to the lure assembly.
9. In summary, therefore, embodiments of the present invention seek to be easier to cast precisely to their intended location, to display reduced tangling and line-fouling, to look better to fish, to provide thumping signals that are virtually irresistible to fish, and, once hooked, to provide a flexible hook attachment that will prevent fish from unhooking themselves.

### BRIEF DESCRIPTION OF THE DRAWINGS

For a further understanding of the nature, objects, and advantages of the present invention, reference should be had to the following detailed description, read in conjunction with the following drawings, wherein like reference numerals denote like elements and wherein:
Figure 1A is a perspective view of a traditional spinner;
Figure 1B is a perspective view of a traditional spinner, whereby the rotational movement of the spinner blade is depicted, with the position of the blade shown at two points of its rotation, 180° apart;
Figure 2A is a side view of a spinner bait;
Figure 2B is a side view of a spinner bait, whereby the rotational movement of the spinner blades are depicted, with the position of the blades shown at two points of their rotation, 180° apart;
Figure 3A is a perspective view of a traditional spinner with an elongated, triangular wire-shaft eye;
Figure 3B is a perspective view of a traditional spinner with an elongated, triangular wire-shaft eye, caught on submerged roots, with attempts under way to free the lure from its entanglement;
Figure 3C is a perspective view of a spinner with a jig-head type attachment;
Figure 3D is a perspective view of a different spinner with a jig-head type attachment;
Figure 4 is a perspective view of a first embodiment of the current invention;
Figure 5 is a perspective view of a second embodiment of the current invention;
Figure 6 is a perspective view of a third embodiment of the current invention;
Figure 7 is a perspective view of a fourth embodiment of the current invention;
Figures 8A-8D is an exploded perspective view of the parts needed to assemble the invention in its various preferred embodiments; and
Figure 9-12 show side views of the preferred embodiment of the apparatus of the present invention illustrating fishing line attached to the lure at various attachment openings, further showing the effects of individual attachment positions on the rotational positions of the blade.

### DETAILED DESCRIPTION

Figure 1A shows a traditional spinner 11. A rotating blade 12 is mounted on a single wire shaft 13 by a clevis 14. Below clevis 14, a small metal or plastic bead 15, also mounted on wire axis 13, facilitates the rotational movements of clevis 14 and blade 12 around axis 13. Below bead 15, one or more lure body components 16 provide weight to allow for better casting of the lure. At the proximal and distal ends of single wire shaft 13, proximal wire shaft eye 17 and distal wire shaft eye 18 allow for the attachment of fishing line 19 (proximally) and of a treble hook 20 (distally). Most spinners also feature decorative dressing material 21 (often consisting of coloured animal hair such as buck-tail material), attached with yarn 22 to hook shank 23 below hook eye 24.

Figure 1B shows traditional spinner 11 in motion. Fishing line 19 is attached to proximal wire shaft eye 17, and spinner 11 is pulled through the water (not depicted) in a direction generally coaxial to fishing line 19 and axis 13, as indicated by arrow 25. The motion of spinner 11 against the resistance of the water leads to rotational movements of clevis 14 and blade 12 around wire 13. Ignoring the forces of gravity and water current, and assuming a constant velocity pull in a direction that is coaxial with wire 13, then blade 12 will rotate around wire 13 at an angle α that is dependent mainly upon the shape of blade 12 and, importantly, which is constant around the 360° of rotation. Fig 1B demonstrates this by depicting blade 12, shown in broken lines, in an upper position 26 and in a lower position 27. Rotational movement direction of blade 12 is indicated by arrows 28, and blade/axle angle α, identical for upper 26 and lower 27 positions is indicated by arrows 29. Spinner type lures, exhibiting this constant angle rotation, emit a monotonous and 'artificial' pressure signal when retrieved.

Figure 2A depicts a typical spinner bait type lure 30. In its most common form, a V-shaped wire 31 has two arms, a straight arm 32 and an offset arm 33, joined by line attachment loop or bend 34. Straight arm 32, at its distal end, is joined to the proximal end of lure head-weight 35 which, in turn, is joined at its opposing end to single hook 36. Decorative dressing 21 is usually applied in a manner similar to traditional spinner 11. Offset arm 33 carries an upper blade 37, mounted rotatably to arm 33 by means of standard clevis 14. Distal to clevis 14, one or more beads 15 are mounted on arm 33, which then ends in distal offset arm eye 38. A standard swivel 39 is attached with one end to distal offset arm eye 38 and with its opposing end to lower blade 40. In its typical form, spinner bait 30 can feature a decorative eye painting 41 on both sides of lure head-weight 35.

Figure 2B shows spinner bait 30 in motion. Fishing line 19 is attached to attachment loop 34, and spinner bait 30 is pulled through the water (not depicted) in a direction coaxial to fishing line 19 and relatively coaxial to straight arm 32, as indicated by arrow 25. The motion of spinner bait 30 against the resistance of the water leads to rotational movements of clevis 14 and upper blade 37 around offset arm 33, as well as to rotational movements of lower blade 40 and swivel 39 around their own long axes. Again ignoring the forces of gravity and water current, and assuming a constant velocity pull in a direction that is fairly coaxial with straight arm 32, but at an angle to offset arm 33, then upper blade 37 will rotate around offset arm 33 at a varying angle (indicated by arrows 29) that constantly shifts between narrow angle β, located at the outside of spinner bait 30, and wide angle γ, located at the inside of spinner bait 30.

Direction of rotation of upper blade 37 is indicated by arrows 42, direction of rotation of lower blade 40 is indicated by arrows 43. In a manner similar to Fig. 1 B, both moving blades are depicted as broken lines, whereby broken lines 44 show upper blade 37 in its uppermost position, forming narrow angle β with offset arm 33, and broken line 45 show upper blade 37 in its lowermost position, forming wide angle γ with offset arm 33. Lower blade 40 is shown in dotted or broken lines in two positions, in a plane parallel to the view at 47 and in a plane orthogonal to the view at 46. While rotating lower blade 40 offers virtually no resistance to the water and emits a minimal pressure signal, rotating upper blade 37 emits a strong rotational signal that constantly varies in intensity, leading to a 'thumping' pressure signal upon retrieval of the lure. As discussed above, however, this feature attracts the fish to the wrong wire arm: the arm without the hook.

Figure 3A shows a common modification 51 of the traditional spinner 11, featuring an elongated and triangular proximal wire shaft eye 52. Examples of such elongated and triangular proximal wire shaft eye are the above quoted fishing lure of Driesel (U.S. Pat 4,998,371) or the currently commercially available Shyster® (Luhr-Jensen Co) spinner. Other elements of the lure, such as clevis 14, blade 12, lure body 16, treble hook 20 and dressing 21 are similar to the standard spinner model 11 featured in Figs. 1. While the purpose of this wire eye design appears to be to keep the lure body off centre, thereby reducing line twist, that design, however, also imparts, nolens volens, a small degree of off-axis rotation to the movement of the blade. Regrettably, a larger degree of off-axis rotation that would lead to a significant degree of "thumping" in the lure's pressure signal could not be obtained if one were to exaggerate the size and angulation of the proximal wire shaft eye, owing to the inherent instability of the wire material, as further illustrated below.

Figure 3B demonstrates the instability of the wire axis 13 and bent proximal wire shaft eye 52 of common spinner modification 51 when under pressure, a common scenario while fishing: Modified spinner 51 is caught, with treble hook 20, in the roots of submerged vegetation 53, and pull, indicated by arrow 54, is exerted to free the lure. Similar pressure will be exerted each time a larger fish is played. This pulling pressure damages and straightens triangular wire eye 52, reducing its angulation at point 55, while at the same time deforming single wire shaft axle 13 between bent wire eye 52 and clevis 14 at point 56, impeding the ability of clevis 14 to freely rotate. The problem is that, between the attachment points of fishing line 19 and treble hook 20, a single elongated rigid piece of wire (formed by wire axis 13 and bent wire shaft eye 52) cannot possibly withstand even those only modestly deformational forces routinely encountered while fishing.

Figure 3C illustrates a weight-headed or "jig-head" type spinner type lure, another modification to the traditional spinner design. Commercially available models of this type include the Mepps® Aglia Spinnflex lure which is shown here as a typical example, designated generally by the numeral 111. This lure features a lead weight head element 101 attached to the proximal end of single wire shaft axle 13, with clevis 14 and blade 12 mounted on it in the standard fashion. Weight head element 101 carries a single line attachment loop 102 which emanates at a 90 degree angle in relation to wire shaft axle 13, a fact which introduces some degree of off-axis rotation of the blade. A single hook 36 carries a soft-plastic twister element 105.

The intent of this weight-headed design is to allow the blade to spin even when the lure is sinking without pull. Regrettably, the distance of the attachment loop from the wire axle (and thereby its ability to introduce uneven blade rotation) is limited by the circumference and shape of weight head element 101. Moreover, the spherical shape of weight head element 101 interferes with the water current hitting blade 12 and sets it into rotation. Broken circles 103 and 104 show the largest plane of weight element 101 parallel (103) and orthogonal (104) to the direction of pull, whereby these planes, with weight head element 101 in this example being a sphere, are obviously of similar size.

Figure 3D illustrates another version of this weight-headed or jig-head spinner type lure, designated generally by the numeral 112. The example shown here is the DEGA® NaturköderSystem popular in Europe for deep sea fishing. Weight head element 107, again made of lead, is particularly heavy. Single wire shaft axle 13 and single hook 36 are here joined by connection ring 106. This jig head type spinner lure features no soft plastic attachments, instead, hook 36 allows for the addition of natural bait of the angler's choosing. Shown are also weight head element 107's maximal plane parallel 108 and orthogonal 109 to the direction of pull. While the shape of weight head element 107 results in a significant lower orthogonal/parallel plane ratio 109/108, when compared to the spherical Aglia Spinnflex weight head element 101, maximal orthogonal plane 109 has still roughly half the area of maximal parallel plane 108, leading to significant resistance to flow interfering with the motion of blade 12. Furthermore, the weight forward design of both lures 111 and 112 interferes with tangle-free casting. Lastly, the heavy weight of the lead elements of lures 111 and 112, while greatly assisting their function as "jig lures" for deep water fishing, eliminates one of the key advantages of spinner type lures: the ability to use the 'lift' provided by the spinning blade to fish in shallow waters and at minimal speeds of retrieval.

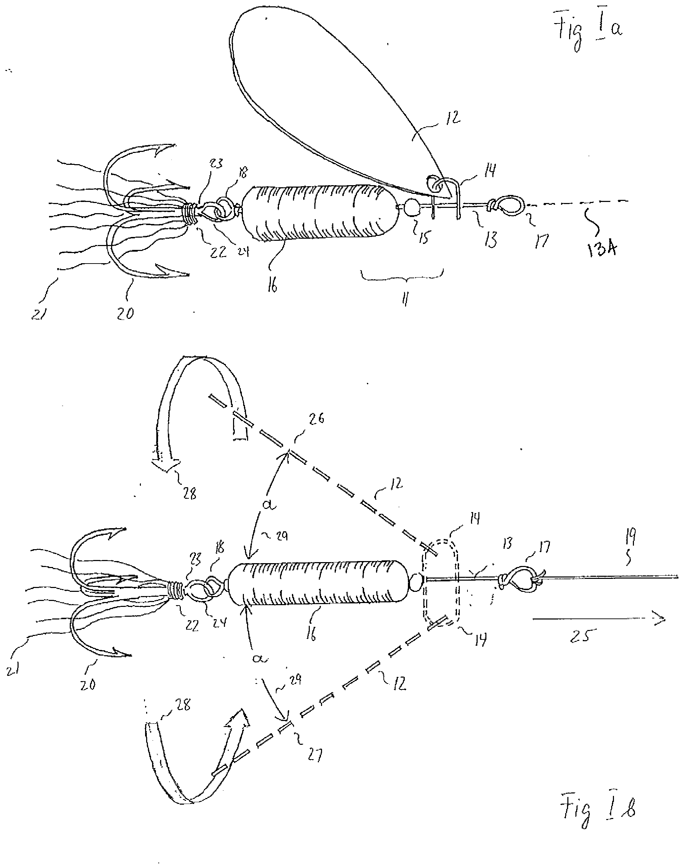

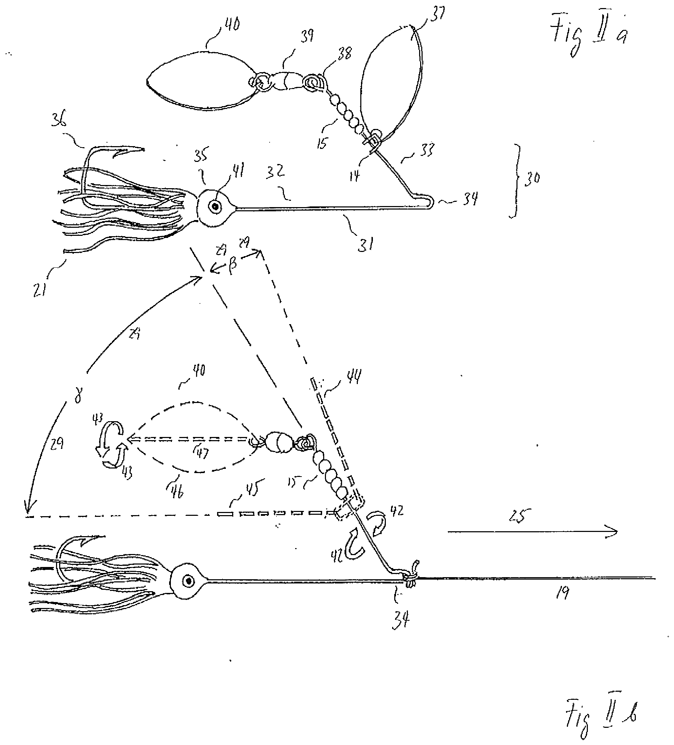

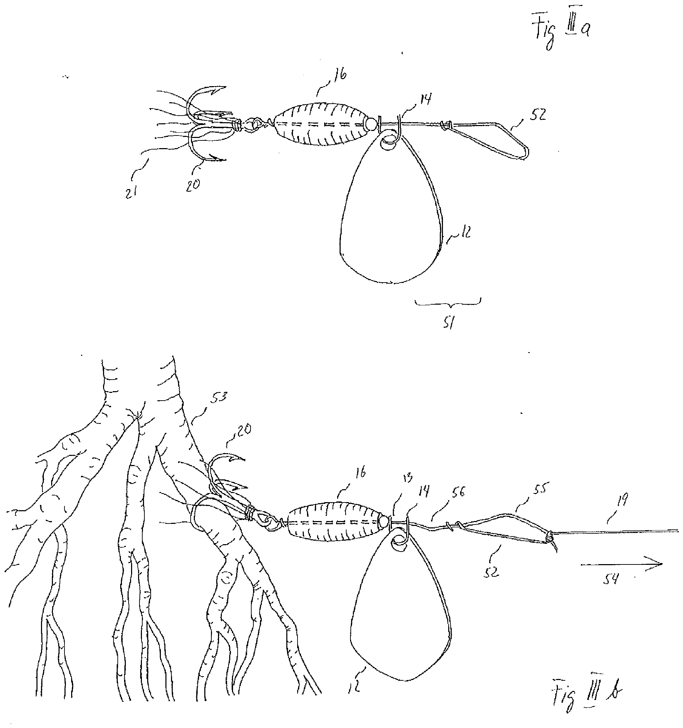

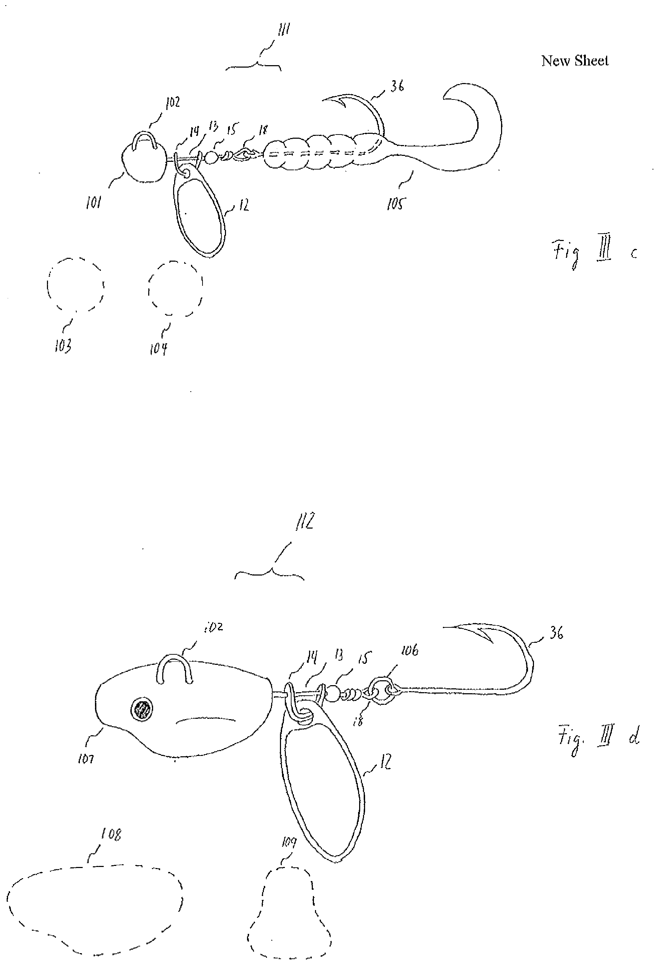

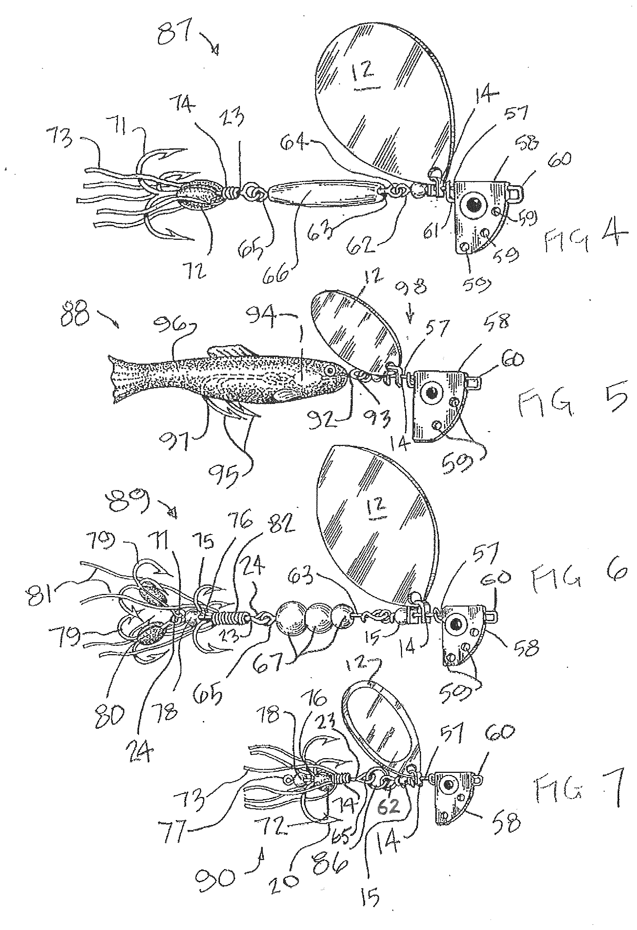

Figure 4 illustrates a first embodiment of the apparatus of the present invention, designated generally by the numeral 87. A proximal wire part 57 (shown in more detail in a subsequent illustration) runs twice through rigid attachment head 58, forming upper loop 60 at the upper end or forward of attachment head 58, and lower loop 61 at the lower or rear end of attachment head 58, thereby securely attaching parts 57 and 58 to each other. Blade 12 attaches to wire 57 with clevis 14. Head 58 provides multiple openings 59, each opening providing an attachment position for a fishing line 19 and swivel 49. Loop 62 is provided at the distal end of proximal wire part 57. Distal loop 62 of proximal wire part 57 attaches to proximal loop 64 of distal wire part 63 which, in turn, by way of its distal loop 65 attaches to hook eye 24 of hook 71. Proximal wire part 57, below rigid attachment head 58, rotatably mounts clevis 14 attached to blade 12. Below clevis 14, a pearl or bead 15 is mounted on proximal wire part 57, ensuring clevis 14's free movement. Between its proximal loop 64 and its distal loop 65, distal wire part 63 carries lure body 66, made of light weight material (e.g., plastic). Treble hook 71 has a weight or lead element 72 mounted distally on its hook shaft 23. Mounted proximally on hook shaft 23 is attachment portion 74 of dressing 73.

Figure 5 shows an alternative embodiment 88 of the present invention, showing its most versatile application. Similar to the first embodiment 87 are proximal wire part 57 and rigid attachment head 58 and their various features (e.g., blade 12, clevis 14). In Figure 5, the ensemble of proximal wire part 57, attachment head 58, blade 12, clevis 14, and pearl 15 is referred to as upper lure assembly 98. This upper lure assembly 98 connects to a lower lure assembly 97, in Figure 5 consisting of bait mounting wire 92 at bait mounting wire eye 93. Distally, bait mounting wire 92 carries internal weight 94, and, further distally yet, it connects to double hook 95. Mounted on this system consisting of elements 92,93,94,95 can be a soft plastic bait 96, as a typical example, in fish form. The unit of elements formed by parts 92-96 is given as an example of how lower lure assembly 97 can look. While lower lure assembly 97 is illustrated here as an internal mounting system carrying a soft plastic bait in fish form, any other standard soft plastic bait could be used or mounted on elements 92-95, or, alternatively, a natural dead bait could be mounted just as easily. Similarly, instead of elements 92-95, but not according to the invention, any standard and commercially available mounting system or rig for natural dead-baits or soft plastic baits could be used, in conjunction with a natural dead-bait or with a conventional soft plastic bait to form lower lure assembly 97. The versatility of this arrangement is due to the fact that upper lure assembly 98 can be used by itself as an independent fish-attracting element, to be combined with multiple currently commercially available products serving as lower lure assembly 97, including but not confined to standard dead-bait spinning rigs, standard soft plastic baits, crank-baits, or even standard spinners.

Figure 6 illustrates another alternative embodiment 89 of the present invention. Similar to the first embodiment 87 are proximal wire part 57 and rigid attachment head 58 and their various features as seen in Figures 4-5 (e.g., blade 12, clevis 14). Proximal wire part 57 again connects to distal wire part 63 in a similar fashion, but distal wire part 63 carries a plurality of round body parts 67, again made of light weight material in the preferred embodiment.

Distal wire part 63, with its distal loop 65, connects to hook eye 24 of upper treble hook 75 which carries, parallel to hook shaft 23, wire brace 76 which, in turn, on its distal end carries weight element 78. In its distal-most portion, wire brace 76 forms loop 77 which, in turn, connects to hook eye(s) 24 of one or more lower treble hooks 79, each of which carry lead element or weight 80 around the distal aspects of their hook shafts 23. In this embodiment, long dressing 81 attaches with portion 82 to upper treble hook 75, covering upper hook 75 and lower hook(s) 79.

Figure 7 shows a fourth embodiment 90 of the present invention. Rigid attachment head 58 and blade 12, as depicted in this example, are smaller, and the overall length of the lure is significantly shorter than in embodiments 87 and 89. Therefore, instead of distal wire part 63 or flexible wire material 68, the distal loop 62 of proximal wire part 57 and the hook eye 24 are joined by split ring 86; a single split ring 86 is used in the illustration, although a plurality of split rings can be used if needed. In this example, both lead element 72, mounted around hook shank 23, and weight element 78 attached with wire brace 76, provide a backward distribution of weight facilitating casting of embodiment 90, and preventing line entanglement. Distal loop 77 of wire brace 76 allows for the attachment of stinger hooks (not depicted) if desired.

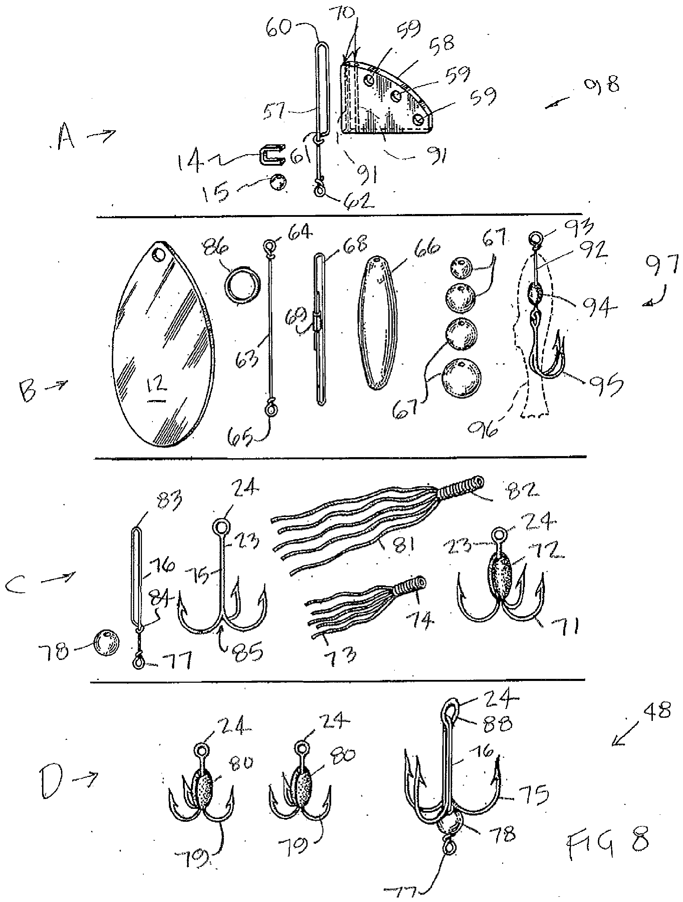

Figure 8 illustrates the various component parts of the four suggested embodiments of Figures 4-7 in more detail. For ease of overview, the various parts are grouped in four different levels A, B, C, and D, in order of their location towards the proximal or distal end of the lure apparatus 87, 88, 89, 90.

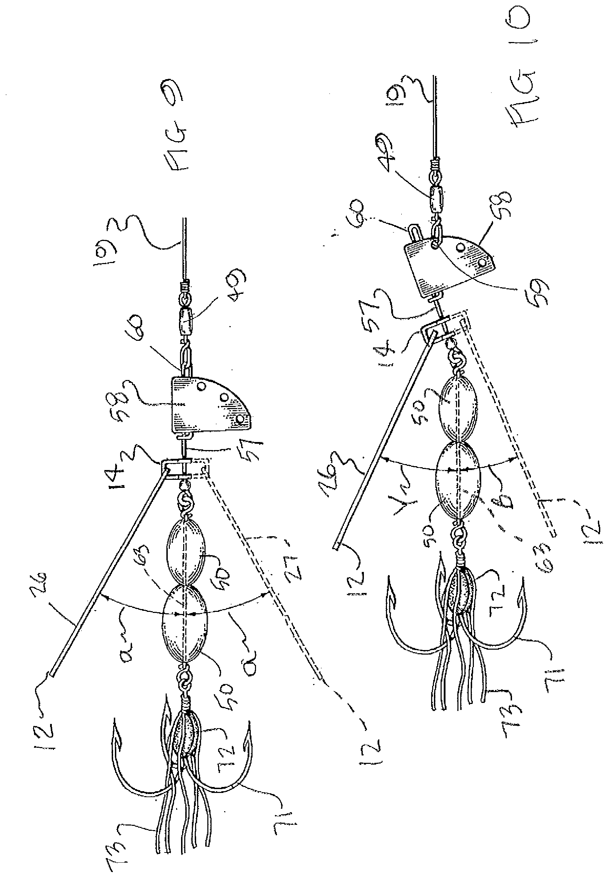

In Figure 8, level A shows attachment head 58 with the two longitudinal openings 70, whose path through attachment head 58 is indicated by broken lines 91. The parallel wire portions of proximal wire part 57 fit in these longitudinal openings 70 and form upper loop 60 and lower loop 61, thereby securely connecting proximal wire part 57 to attachment head 58. Fishing line 19 can be attached to upper loop 60, or directly to attachment head 58 at any one of attachment holes 59 (e.g., see Figures 9-12). Also shown at this level are clevis 14 and bead or pearl 15, which can be mounted on the lower portion of proximal wire part 57 in between lower loop 61 and distal loop 62. The ensemble of the parts depicted in level A, in conjunction with blade 12, form upper lure assembly 98. Upper lure assembly 98, in and by itself, without any of the other parts here depicted, can easily be combined with currently commercially available standard artificial lures or rigs, but not according to the invention, whereby upper lure assembly 98 would be attached proximally to fishing line, and distally, with loop 62, to whatever element is selected to serve as lower lure assembly 97, including but not confined to mounted natural baits, crank-baits, spinners, soft-plastic baits, or even spoons.

Level B shows distal wire part 63 with its proximal 64 and distal 65 attachment loops. As an alternative to distal wire part 63, flexible wire material 68 can be used, forming an elongated loop closed by way of a standard crimp sleeve 69. A plurality of loops formed of flexible wire material 68 could be used, for added safety. The advantage of using flexible wire material at this level is that it cannot be used by fish as leverage to unhook themselves. As another alternative, one or more split ring(s) 86 could be placed in between proximal wire part 57 and a hook eye 24. Further shown in Figure 8, level B are oval single lure body part 66 or, as an alternative, rounded multiple lure body parts 67, made preferably of light weight material (e.g., plastic). No lure body parts are needed if wire part 57 and hook eye 24 are connected by one or more split ring(s) 86. Shown also is spinner blade 12 which can be chosen in a variety of shapes. Lastly, a standard system for the mounting of soft plastic baits or natural deadbaits is depicted, with bait mounting wire 92, proximal bait mounting wire eye 93, internal weight 94, twin hook 95, and, as a broken line silhouette, bait 96, shown in fish form, which could be a soft plastic artificial bait or a natural dead-bait.

In Figure 8 at level C, most differences between the two embodiments 87 and 89, shown in Figures 4 and 6, respectively, are apparent. Fig. 4 embodiment 87 presented a single treble hook 71, carrying lead element 72 around its shank 23. Lead elements 72 can be oval shaped elongated lead pieces with a central longitudinal opening, slit open at the side, commercially available as 'rubber core sinkers', with the rubber core removed and the lead element firmly affixed to the distal portion of treble hook shank 23. In the single treble hook embodiment 87 of Fig. 4, short dressing 73 is fixed with its attachment portion 74 to the proximal portion of treble hook shank 23. To the left at level C are the elements pertaining to the embodiment 89 shown in Fig. 6. Wire brace 76 wraps around upper treble hook 75, whereby upper loop 83 of wire brace 76 fits through hook eye 24 of upper treble 75, and lower loop 84 of wire brace 76 cradles trifurcation 85 of upper treble 75. Weight element 78 is mounted on wire brace 76 between lower loop 84 and distal loop 77, thereby placing it directly below trifurcation 85.

In Figure 8 at level D, one or more distal treble hook(s) 79 are shown which, in the assembled lure, are attached with their hook eye(s) 24 to distal loop 77 of wire brace 76. Also shown at level D, for added clarity, and given the numeral 48, is the hook 75, brace 76 and weight 78 assembly of those parts individually depicted at level C of Figure 8.

Figures 9-12 show embodiments of the present invention in motion. In Figure 9, fishing line 19 is attached to attachment head 58 by way of a snap swivel 49 (commercially available), and the effects of various attachment positions on the rotational angle of the blade are illustrated. In Figure 9, swivel 49 attaches to upper loop 60 of proximal wire part 57, leading to a direction of travel of the lure essentially coaxial with fishing line 19 and proximal wire part 57. Similar to a traditional spinner 11 as depicted in Fig. 1, the motion of the lure against the resistance of the water leads to rotational movements of clevis 14 and blade 12 around proximal wire part 57. Blade 12 is shown in hard lines in an upper position 26 and in broken lines in a lower position 27. The blade/axle angle α (formed by blade 12 and underlying distal wire element 63) is identical for upper 26 and lower 27 positions. With this line attachment leading to constant angle rotation, the lure will emit a monotonous and 'artificial' pressure signal when retrieved, similar to a traditional spinner. Of note, two oval shaped lure body parts 50, hook 71, lead or weighted element 72 and dressing 73 are used in this illustration.

In Figure 10, swivel 49 is attached to an attachment hole 59 in attachment head 58, thereby positioning proximal wire part 57 at a slight angle in relation to fishing line 19. This, in turn, results in blade 12 forming, in its upper position 26, a slightly larger blade/axle angle γ and, in its lower position 27, a slightly smaller blade/axle angle β. This asymmetry of rotation induces the 'thumping' signal referred to above.

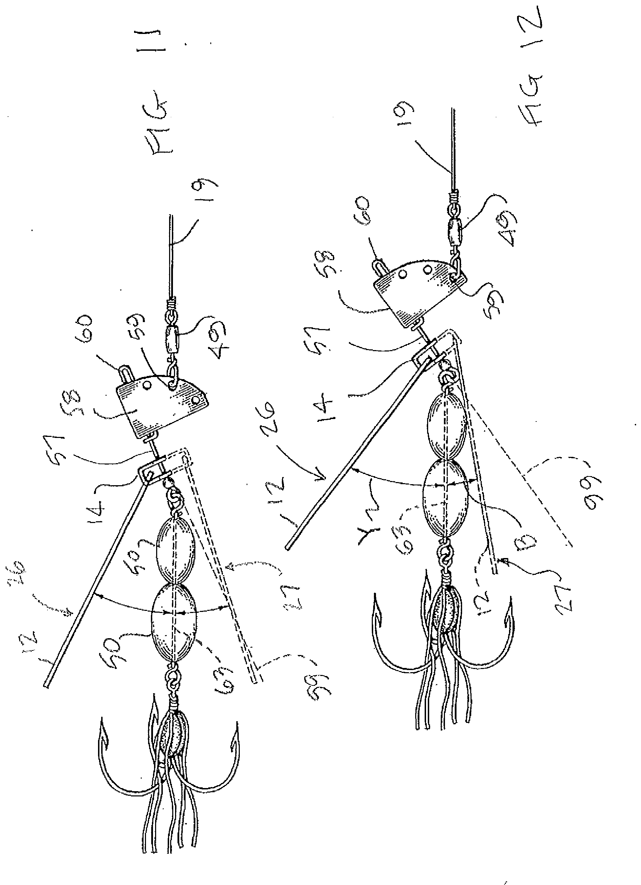

In Figure 11, an attachment hole 59 one position further away from upper loop 60 is chosen for line attachment, thereby further increasing the degree of asymmetry of blade 12 rotation. Figure 12 shows the point of line attachment in the attachment hole 59 the furthest away from loop 60, thereby maximizing blade/axle angle γ and minimizing blade/axle angle β, and, consequently, maximizing the intensity of the 'thumping' signal emitted by the lure.

Figure 11 further illustrates another important point, highlighting the significance of breaking up the lure's long axis into a plurality of segments for the functioning of this invention: if one were to attach head 58 to a single long wire axis as in traditional spinners, represented in Figures 11 and 12 as 'hypothetical' broken line 99, blade 12 in its lower position 27 would interfere with that axis and therefore be unable to rotate. Therefore, in order to allow blade 12 to rotate significantly off axis in relation to wire part 57, this part 57 has to be shortened, with the connection to treble hook 71 being formed by one or more parts 63 or 68 or 86 whose location puts them inside the rotational orbit of blade 12. It is therefore the combined effects of head 58's various attachment positions, and of the breaking down of the lure's long axis into a plurality of elements 57 and 63 (or 68 or 86) that enables blade 12 to engage in significant off axis rotation.

**PARTS LIST**

| NUMBER | DESCRIPTION |
|---|---|
| 11 | traditional in-line spinner |
| 12 | blade |
| 13 | single wire shaft axle |
| 14 | clevis |
| 15 | bead |
| 16 | lure body component |
| 17 | proximal wire shaft eye |
| 18 | distal wire shaft eye |
| 19 | fishing line |
| 20 | treble hook |
| 21 | dressing |
| 22 | yarn |
| 23 | hook shank |
| 24 | hook eye |
| 25 | arrow indicating direction of pull |
| 26 | upper blade position |
| 27 | lower blade position |
| 28 | arrows indicating rotational direction of blade |
| 29 | arrows indicating angle formed by rotating blade and wire shaft axle |
| 30 | spinner bait |
| 31 | V-shaped wire |
| 32 | straight arm |
| 33 | offset arm |
| 34 | attachment loop |
| 35 | head weight |
| 36 | single hook |
| 37 | upper blade |
| 38 | offset arm eye |
| 39 | standard swivel |
| 40 | lower blade |
| 41 | head weight decoration |
| 42 | rotational arrows for upper blade |
| 43 | rotational arrows for lower blade |
| 44 | upper blade in upper position |
| 45 | upper blade in lower position |
| 46 | lower blade in orthogonal position |
| 47 | lower blade in parallel position |
| 48 | hook, brace, and weight assembly |
| 49 | snap swivel |
| 50 | oval shaped multiple lure body parts |
| 51 | modified traditional inline spinner |
| 52 | bent proximal wire shaft eye |
| 53 | submerged vegetation |
| 54 | arrow indicating direction of pull |
| 55 | point indicating reduced angulation |
| 56 | point indicating wire shaft damage |
| 57 | proximal wire part |
| 58 | attachment head |
| 59 | attachment hole |
| 60 | upper loop |
| 61 | lower loop |
| 62 | distal loop of proximal wire part 57 |
| 63 | distal wire part |
| 64 | proximal loop of distal wire part 63 |
| 65 | distal loop of distal wire part 63 |
| 66 | oval shaped single lure body |
| 67 | round shaped multiple lure body parts |
| 68 | flexible wire material |
| 69 | crimping sleeve |
| 70 | longitudinal openings of attachment head |
| 71 | treble hook |
| 72 | lead element of treble hook/weighted element |
| 73 | short dressing |
| 74 | attachment of short dressing |
| 75 | upper treble hook |
| 76 | wire brace |
| 77 | distal loop of wire brace 76 |
| 78 | weight element of upper treble hook 75 |
| 79 | lower treble hook |
| 80 | lead weight element of lower treble hook |
| 81 | long dressing |
| 82 | attachment of long dressing |
| 83 | upper loop of wire brace 76 |
| 84 | lower loop of wire brace 76 |
| 85 | trifurcation of upper treble 75 |
| 86 | split ring |
| 87 | artificial spinner apparatus |
| 88 | artificial spinner apparatus |
| 89 | artificial spinner apparatus |
| 90 | artificial spinner apparatus |
| 91 | broken lines |
| 92 | bait mounting wire |
| 93 | proximal bait mounting wire eye |
| 94 | internal weight |
| 95 | double hook |
| 96 | bait |
| 97 | lower lure assembly |
| 98 | upper lure assembly |
| 99 | dotted line |
| 101 | weight head element of lure 111 |
| 102 | attachment loop |
| 103 | maximal area flow-parallel plane of weight head 101 |
| 104 | maximal area flow-orthogonal plane of weight head 101 |
| 105 | soft plastic element |
| 106 | connector ring |
| 107 | weight head element of lure 112 |
| 108 | maximal area flow-parallel plane of weight head 107 |
| 109 | maximal area flow-orthogonal plane of weight head 107 |
| 111 | Mepps® Aglia Spinnflex lure |
| 112 | DEGA® Naturköder-System lure |

The foregoing embodiments are presented by way of example only; the scope of the present invention is to be limited only by the following claims.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Within the scope of the appended claims, the invention is not restricted to the details of any foregoing embodiments.

## Claims

1. A spinner lure fishing apparatus comprising;
a proximal rigid attachment head (58) having one or more apertures (59) for the attachment of fishing line (19);
a rigid wire (57) projecting from the attachment head (58) along an elongated axis (99) of said rigid wire and provided with a distal loop (62); and
a blade (12) mounted on the wire (57) at a rotational connection and configured to rotate about the axis (99) of the wire (57),
wherein the rigid wire (57) is securely connected to the attachment head (58),
wherein the one or more apertures (59) of the attachment head (58) are spaced apart from the axis (99) of the wire (57), **characterised in that** one or more connected elements are connected to the distal loop (62) of the rigid wire (57), the connected elements selected from the group consisting of:
(i) a fishing hook (71, 75, 79, 95) carrying a weight element (72, 78, 80);
(ii) a bait mounting wire (92) carrying a weight element (94); and
(iii) a wire brace (76) carrying a weight element (78); and
**in that** the centre of mass of the spinner lure fishing apparatus is located distal to the rotational connection of the blade (12) on the wire (57) and/or the attachment head (58) has a mass that is less than a combined mass of all of the other parts of the spinner lure fishing apparatus.

2. The apparatus of claim 1, wherein the attachment head (58) has a plurality of apertures (59).

3. The apparatus of claims 1 or 2, wherein the attachment head (58) has a plurality of off-axis apertures (59) that are spaced apart from the axis (99) of the wire (57) by different distances.

4. The apparatus of claims 1, 2 or 3, wherein the rigid wire (57) forms an on-axis upper loop (60) at the proximal end of the attachment head (58).

5. The apparatus of any preceding claim, wherein the blade (12) is mounted on the wire (57) by a clevis (14).

6. The apparatus of any preceding claim, comprising at least one fishing hook (71, 75, 95) connected to the distal loop (62).

7. The apparatus of claim 6, wherein the fishing hook has a hook shank (23) and comprises a weight element (72, 80) around the hook shank (23).

8. The apparatus of any preceding claim, wherein the fishing hook (71, 75, 95), bait mounting wire (92) and/or wire brace (76) are connected to the distal loop (62) of the rigid wire (57) by a flexible wire element (68).

9. The apparatus of any one of claims 1 to 7, wherein the fishing hook (71, 75, 95), bait mounting wire (92) and/or wire brace (76) are connected to the distal loop (62) of the rigid wire (57) by a rigid wire element (63).

10. The apparatus of any one of claims 6 to 9, comprising one or more treble fishing hooks (75) connected to the distal loop (62), the or each treble fishing hook (75) having a shank (23) and a trifurcation (85).

11. The apparatus of claim 10, wherein at least one of the one or more treble fishing hooks (75) carries a wire brace (76) allowing for the attachment of a weight element (78) which is optionally located adjacent the trifurcation (85), and/or additional fishing hooks.

12. The apparatus of any preceding claim, wherein the attachment head (58) has a first plane of maximal area that is orthogonal to a direction of pull of the apparatus when the apparatus is pulled through water by a fishing line (19) attached to the attachment head (58), a second plane of maximal area that is parallel to the direction of pull of the apparatus when the apparatus is pulled through water by a fishing line (19) attached to the attachment head (58), and wherein the area of the first plane is no more than one quarter of the size of the area of the second plane.

13. The apparatus any preceding claim, further comprising at least one of:
i) a soft plastic bait containing at least one hook;
ii) a dead-bait spinning system or rig with at least one hook, allowing for the mounting of natural dead-baits;
iii) a crank-bait containing at least one hook;
iv) additional fishing lures;
connected to said distal loop (62).

14. The apparatus of any preceding claim, wherein the rigid wire (57) runs through the attachment head (58), optionally forming:
an upper loop (60) forward of the attachment head (58); and
a lower loop (61) at the rear end of the attachment head (58) to secure the rigid wire (57) and the attachment head (58) to each other.

## Patentansprüche

1. Spinnköder-Angelvorrichtung, umfassend;
einen proximalen starren Befestigungskopf (58), der eine oder mehrere Öffnungen (59) zur Befestigung einer Angelschnur (19) aufweist;
einen starren Draht (57), der von dem Befestigungskopf (58) entlang einer länglichen Achse (99) des starren Drahts hervorsteht und mit einer distalen Schleife (62) versehen ist; und
eine Klinge (12), die an dem Draht (57) an einer Drehverbindung montiert und konfiguriert ist, um die Achse (99) des Drahts (57) zu drehen,
wobei der starre Draht (57) fest mit dem Befestigungskopf (58) verbunden ist,
wobei die eine oder die mehreren Öffnungen (59) des Befestigungskopfs (58) von der Achse (99) des Drahts (57) beabstandet sind, **dadurch gekennzeichnet, dass** ein oder mehrere verbundene Elemente mit der distalen Schleife (62) des starren Drahts (57) verbunden sind, wobei die verbundenen Elemente ausgewählt sind aus der Gruppe bestehend aus:
(i) einen Angelhaken (71, 75, 79, 95), der ein Gewichtselement (72, 78, 80) trägt;
(ii) einen Fischködermontagedraht (92), der ein Gewichtselement (94) trägt; und
(iii) eine Drahtstrebe (76), die ein Gewichtselement (78) trägt;
und dadurch, dass der Massenschwerpunkt der Spinnköder-Angelvorrichtung distal zu der Drehverbindung der Klinge (12) an dem Draht (57) angeordnet ist und/oder der Befestigungskopf (58) eine Masse aufweist, die kleiner ist als eine kombinierte Masse aller anderen Teile der Spinnköder-Angelvorrichtung.

2. Vorrichtung nach Anspruch 1, wobei der Befestigungskopf (58) eine Vielzahl von Öffnungen (59) aufweist.

3. Vorrichtung nach Anspruch 1 oder 2, wobei der Befestigungskopf (58) eine Vielzahl von versetzten Öffnungen (59) aufweist, die von der Achse (99) des Drahts (57) durch unterschiedliche Abstände beabstandet sind.

4. Vorrichtung nach den Ansprüchen 1, 2 oder 3, wobei der starre Draht (57) eine achsübereinstimmende obere Schleife (60) an dem proximalen Ende des Befestigungskopfs (58) bildet.

5. Vorrichtung nach einem vorherigen Anspruch, wobei die Klinge (12) mit einem Gabelkopf (14) an dem Draht (57) befestigt ist.

6. Vorrichtung nach einem vorherigen Anspruch, umfassend mindestens einen Angelhaken (71, 75, 95), der mit der distalen Schleife (62) verbunden ist.

7. Vorrichtung nach Anspruch 6, wobei der Angelhaken einen Hakenschaft (23) aufweist und ein Gewichtselement (72, 80) um den Hakenschaft (23) umfasst.

8. Vorrichtung nach einem beliebigen vorherigen Anspruch, wobei der Angelhaken (71, 75, 95), der Fischködermontagedraht (92) und/oder die Drahtstrebe (76) durch ein flexibles Drahtelement (68) mit der distalen Schleife (62) des starren Drahts (57) verbunden sind.

9. Vorrichtung nach einem der Ansprüche 1 bis 7, wobei der Angelhaken (71, 75, 95), der Fischködermontagedraht (92) und/oder die Drahtstrebe (76) durch ein starres Drahtelement (63) mit der distalen Schleife (62) des starren Drahts (57) verbunden sind.

10. Vorrichtung nach einem der Ansprüche 6 bis 9, umfassend einen oder mehrere Dreifach-Angelhaken (75), die mit der distalen Schleife (62) verbunden sind, wobei der oder jeder Dreifach-Angelhaken (75) einen Schaft (23) und eine Dreifachverzweigung (85) aufweist.

11. Vorrichtung nach Anspruch 10, wobei mindestens einer des einen oder der mehreren Dreifach-Angelhaken (75) eine Drahtstrebe (76) trägt, die die Befestigung eines Gewichtselements (78), das sich optional anliegend an der Dreifachverzweigung (85) befindet, und/oder eines zusätzlichen Angelhakens ermöglicht.

12. Vorrichtung nach einem vorherigen Anspruch, wobei der Befestigungskopf (58) eine erste Ebene mit einer maximalen Fläche aufweist, die orthogonal zu einer Zugrichtung der Vorrichtung ist, wenn die Vorrichtung durch eine Angelschnur (19), die an dem Befestigungskopf (58) befestigt ist, durch Wasser gezogen wird, eine zweite Ebene mit einer maximalen Fläche, die parallel zu der Zugrichtung der Vorrichtung ist, wenn die Vorrichtung durch eine an dem Befestigungskopf (58) befestigte Angelschnur (19) durch Wasser gezogen wird, und wobei die Fläche der ersten Ebene nicht mehr als ein Viertel der Größe der Fläche der zweiten Ebene ist.

13. Vorrichtung nach einem vorherigen Anspruch, ferner umfassend mindestens eines von Folgenden:
i) einen weichen Kunststofffischköder, der mindestens einen Haken enthält;
ii) ein Naturfischköder-Spinnsystem oder -gestell mit mindestens einem Haken, das die Montage von Naturfischködern ermöglicht;
iii) einen Kunstköder, der mindestens einen Haken enthält;
iv) zusätzliche Angelköder;
der mit der distalen Schleife (62) verbunden ist.

14. Vorrichtung nach einem vorherigen Anspruch, wobei der starre Draht (57) durch den Befestigungskopf (58) verläuft und optional Folgendes bildet:
eine obere Schleife (60) vor dem Befestigungskopf (58); und
eine untere Schleife (61) auf der Rückseite des Befestigungskopfs (58), um den starren Draht (57) und den Befestigungskopf (58) aneinander zu befestigen.

## Revendications

1. Appareil de pêche au leurre de type cuillère tournante comprenant ;
une tête de fixation rigide proximale (58) comportant une ou plusieurs ouvertures (59) pour la fixation d'une ligne de pêche (19);
un fil métallique rigide (57) faisant saillie à partir de la tête de fixation (58) le long d'un axe allongé (99) dudit fil métallique rigide et doté d'une boucle distale (62) ; et
une palette (12) montée sur le fil métallique (57) au niveau d'un raccord rotatif et conçue pour tourner autour de l'axe (99) du fil métallique (57),
le fil métallique rigide (57) étant fermement raccordé à la tête de fixation (58),
ladite ou lesdites ouvertures (59) de la tête de fixation (58) étant espacées de l'axe (99) du fil métallique (57), **caractérisé en ce qu'**un ou plusieurs éléments raccordés sont raccordés à la boucle distale (62) du fil métallique rigide (57), lesdits éléments raccordés sont choisis dans le groupe constitué par :
(i) un hameçon (71, 75, 79, 95) de pêche portant un élément de lestage (72, 78, 80) ;
(ii) un fil de montage d'appât (92) portant un élément de lestage (94) ; et
(iii) une attache de fil métallique (76) portant un élément de lestage (78) ; et
**en ce que** le centre de masse de l'appareil de pêche au leurre de type cuillère tournante est situé de manière distale par rapport au raccord en rotation de la palette (12) sur le fil métallique (57) et/ou la tête de fixation (58) possède une masse inférieure à une masse combinée de toutes les autres parties de l'appareil de pêche au leurre de type cuillère tournante.

2. Appareil selon la revendication 1, ladite tête de fixation (58) possédant une pluralité d'ouvertures (59).

3. Appareil selon la revendication 1 ou 2, ladite tête de fixation (58) possédant une pluralité d'ouvertures (59) hors-axe qui sont espacées de l'axe (99) du fil métallique (57) de différentes distances.

4. Appareil selon les revendications 1, 2 ou 3, ledit fil métallique rigide (57) formant une boucle supérieure (60) sur l'axe au niveau de l'extrémité proximale de la tête de fixation (58).

5. Appareil selon l'une quelconque des revendications précédentes, ladite palette (12) étant montée sur le fil métallique (57) par une manille (14).

6. Appareil selon l'une quelconque des revendications précédentes, comprenant au moins un hameçon de pêche (71, 75, 95) raccordé à la boucle distale (62).

7. Appareil selon la revendication 6, ledit hameçon de pêche possédant une tige d'hameçon (23) et comprenant un élément de lestage (72, 80) autour de la tige d'hameçon (23).

8. Appareil selon l'une quelconque des revendications précédentes, ledit hameçon (71, 75, 95), le fil métallique de montage d'appât (92) et/ou l'attache de fil métallique (76) étant raccordés à la boucle distale (62) du fil métallique rigide (57) par un élément de fil métallique souple (68).

9. Appareil selon l'une quelconque des revendications 1 à 7, ledit hameçon de pêche (71, 75, 95), ledit fil métallique de montage d'appât (92) et/ou ladite attache de fil métallique (76) étant raccordés à la boucle distale (62) du fil métallique rigide (57) par un élément de fil métallique rigide (63).

10. Appareil selon l'une quelconque des revendications 6 à 9, comprenant un ou plusieurs hameçons de pêche triple (75) raccordés à la boucle distale (62), le ou chaque hameçon de pêche triple (75) possédant une tige (23) et une partie à trois branches (85).

11. Appareil selon la revendication 10, au moins l'un du ou des hameçons de pêche triples (75) portant une attache de fil métallique (76) permettant la fixation d'un élément de lestage (78) qui est situé éventuellement adjacent à la partie à trois branches (85), et/ou des hameçons de pêche supplémentaires.

12. Appareil selon l'une quelconque des revendications précédentes, ladite tête de fixation (58) possédant un premier plan de surface maximale qui est orthogonal à une direction de traction de l'appareil lorsque l'appareil est tiré à travers l'eau par une ligne de pêche (19) fixée à la tête de fixation (58), un second plan de surface maximale parallèle à la direction de traction de l'appareil lorsque celui-ci est tiré dans l'eau par une ligne de pêche (19) fixée à la tête de fixation (58), et ladite surface du premier plan étant inférieure ou égale à un quart de la taille de la surface du second plan.

13. Appareil selon la revendication précédente, comprenant en outre au moins l'un de :
i) un appât en plastique souple contenant au moins un hameçon ;
ii) un système tournant d'appâts morts avec au moins un hameçon, permettant le montage d'appâts morts naturels ;
iii) un appât dur contenant au moins un hameçon ;
iv) des leurres de pêche supplémentaires ;
raccordé(s) à ladite boucle distale (62).

14. Appareil selon l'une quelconque des revendications précédentes, ledit fil métallique rigide (57) traversant la tête de fixation (58), formant éventuellement :
une boucle supérieure (60) en avant de la tête de fixation (58) ; et
une boucle inférieure (61) à l'extrémité arrière de la tête de fixation (58) pour fixer le fil métallique rigide (57) et la tête de fixation (58) l'un à l'autre.
